# EUROPÄISCHE PATENTSCHRIFT

(11) **EP 1 142 736 B1**
(45) Veröffentlichungstag und Bekanntmachung des Hinweises auf die Patenterteilung: **26.09.2007**
(21) Anmeldenummer: 01105537.3
(22) Anmeldetag: 06.03.2001
(51) Int. Cl.: B60J 3/02

(54) **Sonnenblende für Fahrzeuge**
Sunvisor for vehicles
Pare-soleil pour véhicules

(30) Priorität: 05.04.2000 DE 10017046
(43) Veröffentlichungstag der Anmeldung: 10.10.2001
(73) Patentinhaber: Johnson Controls Interiors GmbH & Co. KG, 42285 Wuppertal (DE)
(72) Erfinder: Welter, Patrick, 57730 La Chambre (FR)
(74) Vertreter: Hemmelmann, Klaus

(56) Entgegenhaltungen:
- EP-A- 0 374 582
- WO-A-98/57216
- DE-U- 29 709 454
- US-A- 5 720 509
- US-A- 5 810 420

## Beschreibung

Die Erfindung bezieht sich auf eine Sonnenblende der im Oberbegriff des Anspruchs 1 näher angegebenen Art, wie sie z.B. durch die EP 0 231 440 B1 oder gattungsgemäße EP 0 499 020 B1 bekanntgeworden ist.

Die vorstehend genannten Sonnenblenden haben sich in der Praxis hervorragend bewährt, zumal sie gegenüber herkömmlichen Sonnenblenden mit nicht längs der Achse verschiebbaren Sonnenblendenkörpern einen wesentlich verbesserten Lichtschutz bieten. Andererseits genügen die in den genannten Druckschriften gezeigten Sonnenblenden nicht mehr den heutigen Anforderungen der Abnehmerschaft, die ergänzende Funktionen der Sonnenblenden fordern.

Um diesen Anforderungen gerecht zu werden, wird ausgehend von einer Sonnenblende der eingangs genannten Art erfindungsgemäß eine solche vorgeschlagen, die sich dadurch auszeichnet, daß der Sonnenblendenkörper mit zumindest einer Schalteinrichtung zum Ein- und Ausschalten einer elektrischen Beleuchtungseinrichtung, einer Fernsteuerungseinheit zur Steuerung einer automatischen Vorrichtung zum Öffnen und Schließen von Garagentoren od. dgl. und einer mehrere Leiterdrähte umfassenden Leitung ausgerüstet ist, wobei über die mit der allgemeinen Fahrzeugelektrik verbindbare Leitung eine permanente, von der jeweiligen Sonnenblendenkörperposition unabhängige Stromversorgung der zumindest einen mit der Leitung elektrisch verbundenen Schalteinrichtung sowie mit der ebenfalls mit der Leitung elektrisch verbundenen Fernsteuerungseinheit erfolgt.

Die erfindungsgemäße Sonnenblende kann in herkömmlicherweise von einer Ruheposition, in der sie am Dachhimmel eines Fahrzeugs anliegt, in eine Gebrauchsposition vor eine Fahrzeugwindschutzscheibe geklappt und zusätzlich zu einem Fahrzeugseitenfenster geschwenkt werden. In beiden Positionen ist der Sonnenblendenkörper längs seiner Achse verschiebbar mit der Besonderheit, daß er mit zumindest einer Schalteinrichtung zum Ein- und Ausschalten einer elektrischen Beleuchtungseinrichtung, einer Fernsteuerungseinheit und einer elektrischen Leitung ausgerüstet ist, die eine Stromversorgung sicherstellt, und zwar in der Ruheposition, in der Gebrauchsposition und in jeder beliebigen Verschiebeposition des Sonnenblendenkörpers auf der Achse. Die mit der Schalteinrichtung zusammenwirkende Beleuchtungseinrichtung kann im Sonnenblendenkörper, z.B. als Teil einer Spiegelbaueinheit untergebracht sein, aber auch extern, z.B. im Dachhimmel eines Fahrzeugs angeordnet sein, um z.B. einen im Sonnenblendenkörper angeordneten Spiegel auch bei Dunkelheit benutzen zu können.

Die erfindungsgemäß im Sonnenblendenkörper angeordnete Fernsteuerungseinheit, die für sich zum Stande der Technik gehört, kann zur Steuerung mehrerer automatischer Vorrichtungen zum Öffnen und Schließen mehrerer Garagentore, Parkhausschranken, Türen privater Wohnhäuser und dgl. dienen und ist mit einer entsprechenden Anzahl von Schaltern ausgerüstet. Die Anzahl der Leiterdrähte der Leitung richtet sich nach der Anzahl der vorzusehenen Schalter.

Die Forderung einer permanenten Stromversorgung der Fernsteuerungseinheit in einer verschiebbaren Sonnenblende wird vorteilhafterweise dadurch erfüllt, daß die Leitung eine dem maximalen Verschiebeweg des Sonnenblendenkörpers entsprechende Überlänge aufweist. Es besteht also stets eine Leitungsreserve, wenn der Sonnenblendenkörper aus seiner Normallage in eine Verschiebeposition überführt wird.

Eine besonders vorteilhafte Weiterbildung der Erfindung sieht vor, daß die Überlänge der Leitung innerhalb des Sonnenblendenkörpers untergebracht ist. Auf diese Weise lassen sich auch ästhetische Ansprüche erfüllen. Darauf aufbauend ist in weiterer vorteilhafter Ausgestaltung der Erfindung vorgesehen, daß die an die zumindest eine Schalteinrichtung und die Fernsteuerungseinheit angeschlossene Leitung einerseits durch die Achse, die hohl ausgeführt ist, verläuft und andererseits zurückgeführt ist, um innerhalb des rohrförmigen Rohrkörpers um die Achse herum in losen Windungen zu verlaufen, wobei durch den Öffnungsquerschnitt der Windungen die Überlänge der Leitung definiert ist.

Es kann ferner vorgesehen sein, daß der Gleitkörper eine bodenseitige Ausnehmung als Kabelkanal für die Leitung aufweist und einen Schalter trägt, dessen Schaltglied an der Achse abgestützt ist. Durch den Kabelkanal wird die Umleitung der Leitung erleichtert und insbesondere erreicht, daß der Gleitkörper praktisch unbehindert durch den Hohlkörper gleiten kann. Der am Gleitkörper angeordnete Schalter ist vorgesehen, um die Stromversorgung für die Beleuchtungseinrichtung auszuschalten, wenn der Sonnenblendenkörper sich in seiner unter dem Dachhimmel anliegenden Ruhelage befindet.

Es empfiehlt sich für eine Vereinfachung der Sonnenblendenherstellung, daß die für die Fernsteuerungseinheit vorgesehenen Leiterdrähte der Leitung elektrisch leitend mit einem im Sonnenblendenkörper angeordneten Kuppelelement, das seinerseits mit der Fernsteuerungseinheit kuppelbar ist, verbunden sind. Bei diesem Kuppelglied kann es sich um ein handelsübliches Bauteil handeln.

Zweckmäßigerweise kann fernerhin vorgesehen sein, daß die Achse mit Gleitkörper, mehradriger Leitung, Hohlkörper, Schalteinrichtung und Kuppelelement eine vormontierte, durch eine zur Aussteifung des Sonnenblendenkörpers dienende Rahmenstruktur mit in die Enden des Hohlkörpers eingreifende Stopfenelemente ergänzte Baueinheit bilden. Diese Baueinheit kann dann umschäumt oder, wie es bevorzugt vorgesehen ist, zwischen den Hälften eines zweischalig aufgebauten Sonnenblendenkörpers angeordnet werden.

Ein Ausführungsbeispiel der Erfindung wird im folgenden anhand der Zeichnungen näher erläutert, und es zeigen:
- Fig. 1: eine Gesamtansicht der Sonnenblende,
- Fig. 2: eine aufgeklappte Draufsicht des aus zwei Schalen gebildeten Sonnenblendenkörpers der Sonnenblende nach Fig. 1 und
- Fig. 3 - 9: Einzelheiten der Sonnenblende und eine Montagefolge.

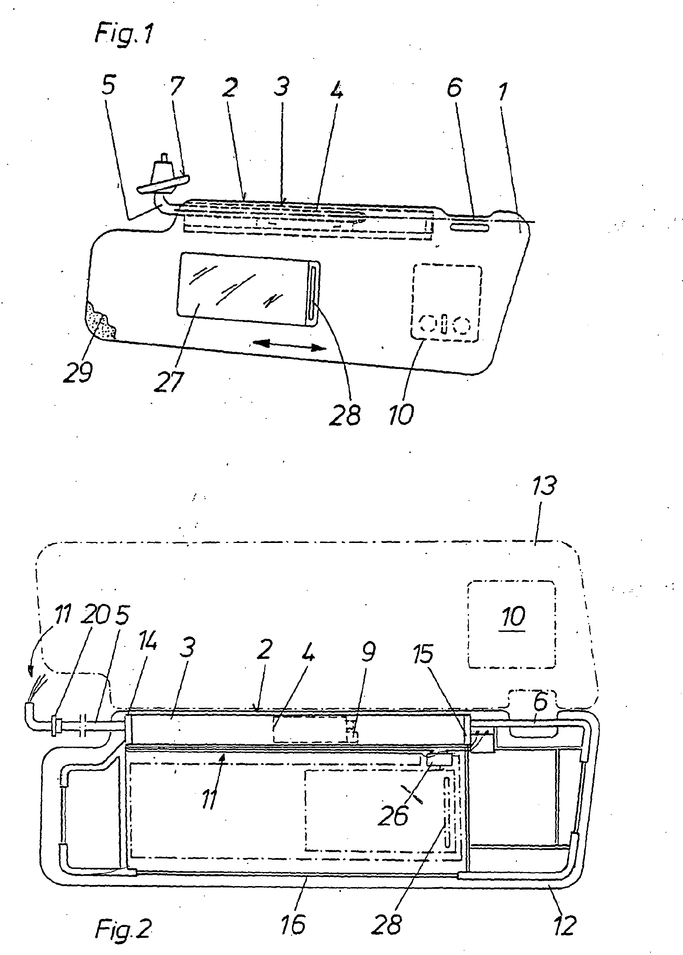

Die Sonnenblende nach Fig. 1 besteht aus einem Sonnenblendenkörper 1, der im Bereich seiner oberen Längskante 2 einen darin eingelagerten rohrförmigen Hohlkörper 3 trägt, in dem ein Gleitkörper 4 axial verschiebbar aufgenommen ist, welcher eine Achse 5 lagert. Die Sonnenblende weist weiterhin einen Lagerstift 6 zum Einrasten in ein nicht dargestelltes Gegenlager auf. Die Achse 5 besitzt eine etwa L-förmige Ausbildung, deren langer Schenkel von dem Gleitkörper 4 und deren kurzer Schenkel von einem Schwenklagerböckchen 7 aufgenommen ist. Der Sonnenblendenkörper 1 ist üblicherweise auf dem langen Schenkel der Achse 5 in der aus Fig. 1 ersichtlichen Lage angeordnet. Damit sich Fahrer und Beifahrer eines Fahrzeugs vor einfallenden Sonnenstrahlen oder anderen Lichtquellen schützen können, ist der Sonnenblendenkörper 1 oberhalb der Windschutzscheibe an der Fahrzeugkarosserie befestigt und er kann vor die Windschutzscheibe geklappt oder zu einer Seitenscheibe geschwenkt werden. Darüber hinaus ist eine, durch den Doppelpfeil angedeutete verschiebbare Anordnung des Sonnenblendenkörpers 1 auf dem langen Schenkel der Achse 5 vorgesehen. Insoweit entspricht die neue Sonnenblende im wesentlichen dem Aufbau der Sonnenblende nach der EP 0 499 020 B1, so daß Einzelheiten des Gleitkörpers 4 mit Andruckelement 8 und des Rast- und Verschiebemechanismusses nicht näher zu erläutern sind.

Die neue Sonnenblende weist darüber hinaus eine im Sonnenblendenkörper 1 angeordnete Schalteinrichtung mit Schalter 9, eine Fernsteuerungseinheit 10 und eine mehrere Leiterdrähte umfassende Leitung 11 auf.

Wie aus Fig. 2 ersichtlich, weist der Sonnenblendenkörper 1 eine zweischalige Bauart auf. Die Schalenhälften 12, 13 können z.B. aus geschäumten oder gespritzten Schaumstoff bestehen. Nach dem Zusammenfügen der Schalenhälften 12, 13 erhält der Sonnenblendenkörper 1 in der Regel noch eine Umhüllung aus z.B. textilen Dekormaterial. Zwischen den Schalenhälften 12, 13 befinden sich die Funktionselemente der Sonnenblende, die zumeist weiter oben schon erwähnt worden sind. Aus Fig. 2 ist ersichtlich, daß sich an den Hohlkörper 3 Endstopfen 14, 15 anschließen, die Teil einer zur Aussteifung des Sonnenblendenkörpers dienenden Rahmenstruktur 16 sind, die aus Kunststoff-Spritzgußteilen und damit verbundenen Drahtabschnitten bestehen kann. In den Endstopfen 14, 15 befinden sich nicht näher dargestellte Durchgangsöffnungen für die Leitung 11 sowie im Endstopfen 14 auch eine Durchgangsöffnung für die Achse 5.

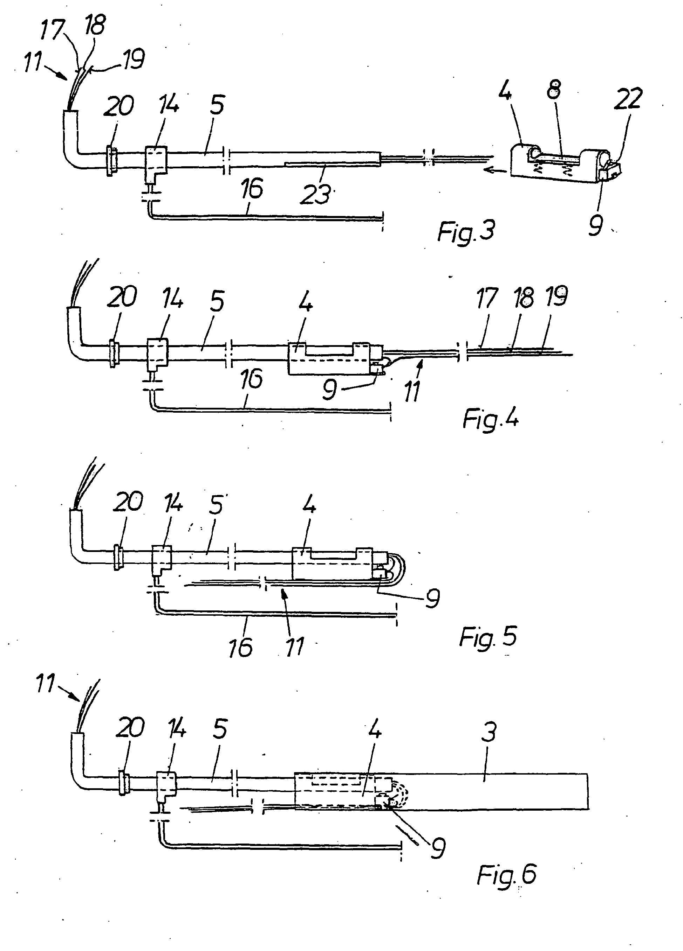

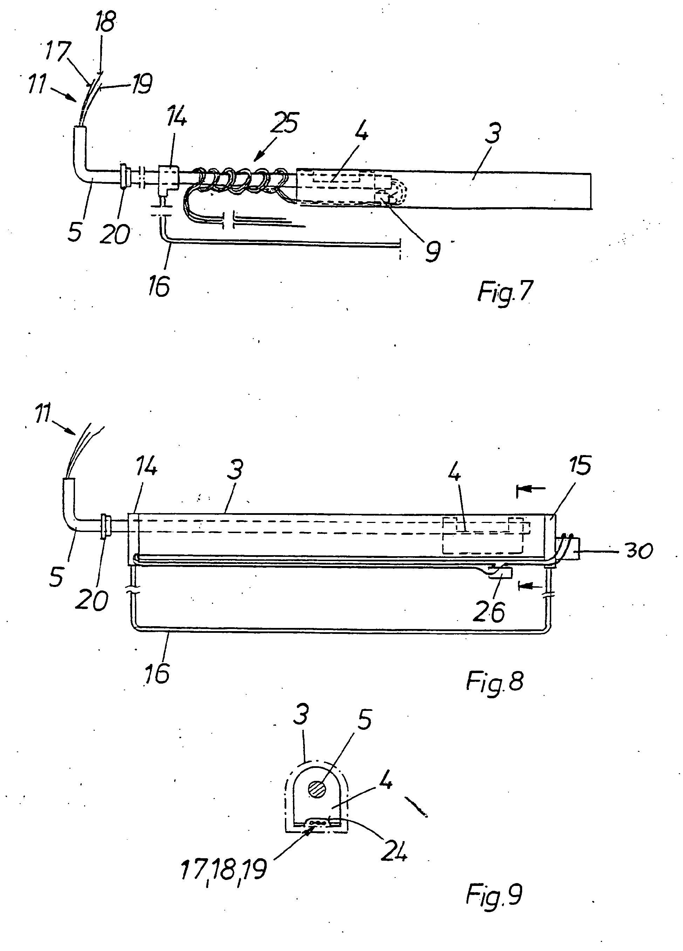

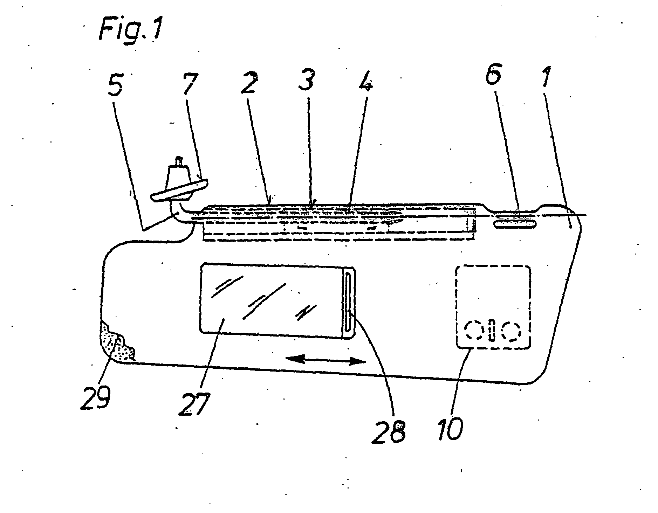

Die für die Stromversorgung der Beleuchtungseinrichtung (nicht gezeigt) und der Fernsteuerungseinheit 10 benötigte Leitung 11 umfaßt mehrere, z.B. wie dargestellt drei Leiterdrähte 17, 18, 19. Bei der Montage wird die Leitung 11 zunächst durch die hohle Achse 5 geführt (Fig. 3), wonach an das aus dem kurzen Achsschenkel heraustretende Ende ein Steckerelement (nicht gezeigt) zum Anschluß an die allgemeine Fahrzeugelektrik angeklemmt wird. Auf den langen Achsschenkel ist zuvor ein Abschlußring 20 und ein Stopfen 14 der Rahmenstruktur 16 aufgeschoben worden. Die Leitung wird sodann durch den Gleitkörper 4 geführt, der auf dem Endbereich des langen Achsschenkels der Achse 5 verrastet wird. Am Gleitkörper 4 ist ein Schalter 9 angeordnet, dessen Schaltglied 22 an der Achse 5 angreift und den Stromkreis für die nichtgezeigte Beleuchtungseinrichtung unterbricht, sobald es im Bereich einer Achsenabflachung 23 zur Anlage gelangt. Diese Anlage ist in der Regel dann gegeben, wenn der Sonnenblendenkörper 1 sich in seiner am Dachhimmel anliegenden Ruhelage befindet. Einer der Leiterdrähte 17 - 19, z.B. der Leiterdraht 19 wird an den Schalter 9 angeschlossen und weitergeführt (Fig. 4). Die Leitung 11 mit den Leiterdrähten 17 - 19 wird dann zurückgeführt (Fig. 5), durchläuft einen Kabelkanal 24 im Gleitkörper 4 und verläuft sodann mit losen Windungen 25 um die Achse 5 herum (Fig. 7), um dann aus dem Hohlkörper 3 und dem Endstopfen 14 wieder herauszutreten, um wiederum zurückgeführt zu werden mit einem parallelen Verlauf zum Hohlkörper 3. Die freien Enden der Leiterdrähte 17 - 19 werden ggf. an einen Mikroschalter 26 und über diesen wie auch direkt an ein an der Rahmenstruktur 16 festgelegtes Kuppelelement 30 für die Fernsteuerungseinheit 10 angeschlossen (Fig. 8). Der Mikroschalter wird vorgesehen, wenn der Sonnenblendenkörper mit einem Spiegel 27 und einem Spiegelabdeckschieber 28, der mit dem Mikroschalter 26 zusammenwirkt, ausgestattet wird.

Die Baueinheit gemäß Fig. 8 wird in eine Sonnenblendenkörperhäfte 12, wie in Fig. 2 gezeigt, eingelegt und durch die zweite Sonnenblendenkörperhälfte 13, die mit der ersten über ein Filmscharnier verbunden sein kann, abgedeckt. Ggf. sind die Sonnenblendenkörperhälften 12, 13 miteinander zu verkleben oder anderweitig aneinander festzulegen. Die Festlegung der Sonnenblendenkörperhälften 12, 13 kann auch durch ein Dekormaterial 29 erfolgen, mit dem ein Sonnenblendenkörperrohling üblicherweise umhüllt ist. Nach dem Umhüllen erfolgt noch ein Einklipsen des Abschlußrings 20 in den Endstopfen 14 unter Gewährleistung eines sauberen Abschlusses.

Beim Verschieben des Sonnenblendenkörpers 1 längs des langen Schenkels der Achse 5 bleibt die Stromzuführung für die Fernsteuerungseinheit 10 stets aufrechterhalten, weil für die Leitung 11 dank der losen Windungen 25 genügend Reservematerial zur Verfügung steht. Die neue Sonnenblende ist also klappbar, verschwenkbar und verschiebbar und zudem mit einer Stromzuführung ausgerüstet, die in jeder Position des Sonnenblendenkörpers 1 eine Stromzufuhr zur Fernsteuerungseinheit gewährleistet. Auch ist eine Zwangsausschaltung einer Beleuchtungseinrichtung gegeben, die auch bei einer offenen Schiebedeckelposition wirksam ist.

## Patentansprüche

1. Sonnenblende für Fahrzeuge mit einem Sonnenblendenkörper (1), der um eine Achse (5) schwenkbar und auf dieser Achse (5) längsverschiebbar angeordnet ist, wobei die Achse (5) drehbeweglich, jedoch gegen ein axiales Verschieben gesichert, von einem Gleitkörper (4) aufgenommen ist, der seinerseits drehfest, jedoch axial verschiebbar, in einem rohrförmigen, im Bereich einer Längskante (2) des Sonnenblendenkörpers (1) eingebetteten Hohlkörper (3) gelagert ist und ein radial gegen die eine Abflachung (23) aufweisende Achse (5) wirkendes federbelastetes Andruckelement (8) trägt, **dadurch gekennzeichnet, daß** der Sonnenblendenkörper (1) mit zumindest einer Schalteinrichtung (9) zum Ein- und Ausschalten einer elektrischen Beleuchtungseinrichtung, einer Fernsteuerungseinheit (10) zur Steuerung einer automatischen Vorrichtung zum Öffnen und Schließen von Garagentoren od. dgl. und einer mehrere Leiterdrähte (17 - 19) umfassenden Leitung (11) ausgerüstet ist, wobei über die mit der allgemeinen Fahrzeugelektrik verbindbare Leitung (11) eine permanente, von der jeweiligen Sonnenblendenkörperposition unabhängige Stromversorgung der zumindest einen mit der Leitung (11) elektrisch verbundenen Schalteinrichtung (9) sowie mit der ebenfalls mit der Leitung (11) elektrisch verbundenen Fernsteuerungseinheit (10) erfolgt.

2. Sonnenblende nach Anspruch 1, **dadurch gekennzeichnet, daß** die Leitung (11) eine dem maximalen Verschiebeweg des Sonnenblendenkörpers (1) auf der Achse (5) entsprechende Überlänge aufweist.

3. Sonnenblende nach Anspruch 2, **dadurch gekennzeichnet, daß** die Überlänge der Leitung (11) innerhalb des Sonnenblendenkörpers (1) untergebracht ist.

4. Sonnenblende nach wenigstens einem der vorangegangenen Ansprüche, **dadurch gekennzeichnet, daß** die an die zumindest eine Schalteinrichtung (9) und die Fernsteuerungseinheit (10) angeschlossene Leitung (11) einerseits durch die Achse (5), die hohl ausgeführt ist, verläuft und andererseits zurückgeführt ist, um innerhalb des rohrförmigen Hohlkörpers (3) um die Achse (5) herum in losen Windungen (25) zu verlaufen, wobei durch den Öffnungsquerschnitt der Windungen (25) die Überlänge der Leitung (11) definiert ist.

5. Sonnenblende nach zumindest einem der vorangegangenen Ansprüche, **dadurch gekennzeichnet, daß** der Gleitkörper (4) eine bodenseitige Ausnehmung als Kabelkanal (24), für die Leitung (11) aufweist und einen Schalter (9) trägt, dessen Schaltglied (22) an der Achse (5) abgestützt ist.

6. Sonnenblende nach zumindest einem der vorangegangenen Ansprüche, **dadurch gekennzeichnet, daß** die für die Fernsteuerungseinheit (10) vorgesehenen Leiterdrähte (17 - 19) der Leitung (11) elektrisch leitend mit einem im Sonnenblendenkörper (1) angeordneten Kuppelelement (30), das seinerseits mit der Fernsteuerungseinheit (10) kuppelbar ist, verbunden sind.

7. Sonnenblende nach zumindest einem der vorangegangenen Ansprüche, **dadurch gekennzeichnet, daß** die Achse (5) mit Gleitkörper (4), mehradriger Leitung (11), Hohlkörper (3), Schalteinrichtung (9) und Kuppelelement (30) eine vormontierte, durch eine zur Aussteifung des Sonnenblendenkörpers (1) dienende Rahmenstruktur (16) mit in die Enden des Hohlkörpers (3) eingreifende Stopfenelemente (14, 15) ergänzte Baueinheit bilden.

## Claims

1. Sun visor for vehicles, with a sun visor body (1) which is arranged in a manner such that it can be pivoted about a spindle (5) and such that it can be displaced longitudinally on said spindle (5), the spindle (5) being held rotatably, but secured against axial displacement, by a sliding body (4) which, for its part, is mounted in a rotationally fixed, but axially displaceable manner, in a tubular hollow body (3) embedded in the region of a longitudinal edge (2) of the sun visor body (1), and bears a spring-loaded press-on element (8) which acts radially against the spindle (5) which has a flattened portion (23), **characterized in that** the sun visor body (1) is equipped with at least one switching device (9) for switching on and off an electric illumination device, a remote control unit (10) for controlling an automatic device for opening and closing garage doors or the like, and a line (11) which comprises a plurality of conductor wires (17 - 19), and with a continuous supply of current to the at least one switching device (9), which is electrically connected to the line (11), and to the remote control unit (10), which is likewise electrically connected to the line (11), which supply of current is independent of the particular position of the sun visor body, taking place via the line (11) which can be connected to the general electric system of the vehicle.

2. Sun visor according to Claim 1, **characterized in that** the line (11) has an excess length corresponding to the maximum displacement path of the sun visor body (1) on the spindle (5).

3. Sun visor according to Claim 2, **characterized in that** the excess length of the line (11) is accommodated within the sun visor body (1).

4. Sun visor according to at least one of the preceding claims, **characterized in that** the line (11) which is connected to the at least one switching device (9) and the remote control unit (10) firstly runs through the spindle (5), which is of hollow design, and secondly is guided back in order to run around the spindle (5) within the tubular hollow body (3) in loose coils (25), with the excess length of the line (11) being defined by the opening cross section of the coils (25).

5. Sun visor according to at least one of the preceding claims, **characterized in that** the sliding body (4) has a recess on the bottom side as a cable duct (24) for the line (11) and bears a switch (9), the switching element (22) of which is supported on the spindle (5).

6. Sun visor according to at least one of the preceding claims, **characterized in that** the conductor wires (17 - 19) of the line (11), which conductor wires are provided for the remote control unit (10), are connected in an electrically conductive manner to a coupling element (30) which is arranged in the sun visor body (1) and, for its part, can be coupled to the remote control unit (10).

7. Sun visor according to at least one of the preceding claims, **characterized in that** the spindle (5) with the sliding body (4), multi-wire line (11), hollow body (3), switching device (9) and coupling element (30) forms a preassembled constructional unit which is supplemented by a frame structure (16) which serves to stiffen the sun visor body (1) and has stopper elements. (14, 15) engaging in the ends of the hollow body (3).

## Revendications

1. Pare-soleil pour véhicules comprenant un corps de pare-soleil (1) qui peut pivoter autour d'un axe (5) et qui est monté de manière à pouvoir coulisser dans le sens de la longueur sur cet axe (5), l'axe (5) étant accueilli par un corps coulissant (4) de manière à pouvoir tourner mais cependant bloqué contre un déplacement axial, lequel est à son tour logé de manière à ne pas pouvoir tourner mais à pouvoir coulisser dans le sens axial dans un corps creux tubulaire (3) encastré dans la région d'un bord longitudinal (2) du corps de pare-soleil (1) et comporte un élément presseur (8) à contrainte par ressort qui agit dans le sens radial contre l'axe (5) présentant un méplat (23), **caractérisé en ce que** le corps de pare-soleil (1) est équipé d'au moins un dispositif de commutation (9) pour mettre en marche ou arrêter un dispositif d'éclairage électrique, une unité de commande à distance (10) pour commander un dispositif automatique d'ouverture et de fermeture de portes de garage ou similaire et un câble (11) englobant plusieurs fils conducteurs (17 - 19), une alimentation électrique permanente, indépendante de la position respective du corps de pare-soleil de l'au moins un dispositif de commutation (9) relié électriquement avec le câble (11) ainsi que de l'unité de commande à distance (10) elle aussi reliée électriquement avec le câble (11) s'effectuant par le biais du câble (11) pouvant être relié avec le circuit électrique général du véhicule.

2. Pare-soleil selon la revendication 1, **caractérisé en ce que** le câble (11) présente une surlongueur correspondant à la course de déplacement maximale du corps de pare-soleil (1) sur l'axe (5).

3. Pare-soleil selon la revendication 2, **caractérisé en ce que** la surlongueur du câble (11) est logée à l'intérieur du corps de pare-soleil (1).

4. Pare-soleil selon au moins l'une des revendications précédentes, **caractérisé en ce que** le câble (11) raccordé à l'au moins un dispositif de commutation (9) et à l'unité de commande à distance (10) s'étend d'un côté à travers l'axe (5), qui est réalisé creux, et de l'autre côté est ramené en arrière de manière à passer à l'intérieur du corps creux tubulaire (3) autour de l'axe (5) en spires lâches (25), la surlongueur du câble (11) étant définie par la section transversale d'ouverture des spires (25).

5. Pare-soleil selon au moins l'une des revendications précédentes, **caractérisé en ce que** le corps coulissant (4) présente un creux du côté du fond faisant office de chemin de câble (24) pour le câble (11) et comporte un commutateur (9) dont l'élément de commutation (22) est soutenu sur l'axe (5).

6. Pare-soleil selon au moins l'une des revendications précédentes, **caractérisé en ce que** les fils conducteurs (17 - 19) du câble (11) qui sont prévus pour l'unité de commande à distance (10) sont reliés électriquement avec un élément de connexion (30) disposé dans le corps de pare-soleil (1) et qui de son côté peut être connecté avec l'unité de commande à distance (10).

7. Pare-soleil selon au moins l'une des revendications précédentes, **caractérisé en ce que** l'axe (5), avec le corps coulissant (4), le câble multiconducteurs (11), le corps creux (3), le dispositif de commutation (9) et l'élément de connexion (30), forme un sous-ensemble prémonté complété par une structure de cadre (16) servant à raidir le corps de pare-soleil (1) avec des éléments bouchons (14, 15) qui pénètrent dans les extrémités du corps creux (3).
